# EUROPÄISCHE PATENTSCHRIFT

(11) **EP 0 481 196 B1**
(45) Veröffentlichungstag und Bekanntmachung des Hinweises auf die Patenterteilung: **30.03.1994**
(21) Anmeldenummer: 91114223.0
(22) Anmeldetag: 24.08.1991
(51) Int. Cl.: B60J 3/00, B60J 1/02

(54) **Frontscheibe eines Kraftwagens**
Front screen of a motor vehicle
Vitre avant de voiture automobile

(30) Priorität: 19.10.1990 DE 4033188
(43) Veröffentlichungstag der Anmeldung: 22.04.1992
(73) Patentinhaber: MERCEDES-BENZ AG, 70327 Stuttgart (DE)
(72) Erfinder: Zweigart, Gerhard, D 7042 Aidlingen (DE)

(56) Entgegenhaltungen:
- EP-A- 0 091 776
- DE-A- 2 920 363
- US-A- 2 549 395
- US-A- 2 620 222
- US-A- 3 244 547

## Beschreibung

Die Erfindung betrifft eine Frontscheibe eines Kraftwagens, deren oberer Rand mit einem undurchsichtigen Streifen versehen ist, an den sich ein aus undurchsichtigen Punkten bestehendes streifenförmiges Punktmuster mit zur Scheibenmitte hin zunehmend vermindertem Punktdurchmesser anschließt, wobei innenseitig der Frontscheibe voneinander beabstandet angeordnete, abklappbare Sonnenblenden vorgesehen sind und der Abschnitt zwischen den abgeklappten Sonnenblenden, der unterseitig von der Projektion der Oberkante des Innenspiegels begrenzt wird, durch eine weitere Blende abdeckbar ist.

Kraftwagen mit einer derartigen Einrichtung zum Schutz des Fahrers und Beifahrers vor blendendem Sonnenlicht, wobei die zusätzliche Blende im Bereich zwischen den beiden schwenkbaren Sonnenblenden als oberhalb des Innenspiegels gleichfalls schwenkbar angeordnete Blende ausgebildet ist, sind bekannt. Allein schon aus Toleranzgründen ist es nicht möglich, diese dritte Blende in ihrer Gebrauchslage spaltfrei an die heruntergeklappte Sonnenblende und den Innenspiegel anzuschließen, so daß es je nach Sonneneinstrahlung immer noch zu Störungen der Sicht kommen kann. Außerdem ist es bei heruntergeklappter dritter Blende schwierig, straßenseitig hochplazierte Hinweisschilder und Ampelanlagen ohne Haltungsänderung in das Blickfeld zu bekommen.

Es ist Aufgabe der Erfindung, die zusätzliche Blende, ohne das Erscheinungsbild des Kraftwagens zu beeinträchtigen, mit herstellungstechnisch einfachen Mitteln so auszubilden, daß bei allen möglichen Einfallswinkeln der Sonnenstrahlen es trotz ausreichender Beobachtungsmöglichkeit zu keiner Blendwirkung kommt.

Diese Aufgabe wird bei einer Frontscheibe nach dem Oberbegriff des Patentanspruches 1 durch dessen kennzeichnende Merkmale gelöst.

Durch die EP-A-0 091 776 ist es zwar bereits bekannt, als Ersatz von Sonnenblenden einen oberen, über die ganze Breite der Frontscheibe reichenden Streifen mit einem Punktmuster vorzusehen, jedoch werden dabei zwei übereinander angeordnete Bereiche mit jeweils von oben nach unten zunehmender freier Durchtrittsfläche gebildet, so daß trotz einer dauernden Abschottung bei starker Sonneneinstrahlung nicht die Gewähr gegeben ist, daß keine Blendwirkung auftritt.

Selbst bei nicht ganz vorgeklappter Sonnenblende tritt keine Blendwirkung ein, wenn der von dem gleichmäßig verteilten Punktmuster eingenommene Bereich größer ist als der zwischen den abgeklappten Sonnenblenden einerseits und dem randseitigen Streifen und der Projektion der Oberkante des Innenspiegels andererseits gebildete Abschnitt, so daß zu den abgeklappten Sonnenblenden und dem Innenspiegel hin eine Überlappung gegeben ist.

In weiterer Ausgestaltung der Erfindung wird zur besseren Eingliederung in die angrenzenden oberen Scheibenbereiche das gleichmäßig verteilte Punktmuster außer durch den oberseitigen Streifen noch durch das herumgeführte streifenförmige und zur Scheibenmitte hin einen abnehmenden Punktdurchmesser aufweisende Punktmuster begrenzt.

Ein Ausführungsbeispiel der Erfindung wird nachfolgend anhand der Zeichnung näher erläutert. Es zeigt:
- Figur 1: eine Ansicht des oberen Frontscheibenbereiches bei abgeklappter linksseitiger Sonnenblende und
- Figur 2: einen Teilbereich der scheibenseitigen Blende.

Ein nicht näher dargestellter Kraftwagen ist mit einer dem Fahrer und Beifahrer zugeordneten, verschwenkbaren Sonnenblende ausgestattet, von denen lediglich die fahrerseitig abgeklappte Sonnenblende 1 ersichtlich ist. Die sonnenblende 1 ist in nicht gezeigter Weise schwenkbar an einer dachseitigen Verkleidung 2 gelagert, die auch einen Innenspiegel 3 aufnimmt. Eine der Sonnenblende 1 und dem Innenspiegel 3 vorgelagerte Frontscheibe 4 weist zur Abdeckung ihrer Befestigung an der Karosserie und zum Überdecken der Verkleidung 2 an ihrem oberen Rand 5 einen undurchsichtigen, im Siebdruckverfahren aufgebrachten Streifen 6 auf, an den sich ein zusammen mit dem Streifen 6 aufgebrachtes Punktmuster 7 mit zur Mitte der Frontscheibe 4 hin abnehmendem Punktdurchmesser anschließt.

Ein bei abgeklappten Sonnenblenden 1 nicht abgedeckter Bereich, der durch die Seitenkanten 8 der Sonnenblenden 1, dem Streifen 6 und der Projektion der Oberkante 9 des Innenspiegels 3 begrenzt wird, wird überdeckt von einer feststehenden, scheibenseitigen Blende 10, die im Anschluß an den undurchsichtigen Streifen 6 als Punktmuster 11 mit gleichmäßig verteilten Punkten 12 ausgebildet ist. Der Durchmesser der einzelnen Punkte 12 und deren Abstand untereinander ist so bemessen, daß bezogen auf den durch das gleichmäßig verteilte Punktmuster 11 erfaßten Bereich, der wie oben angeführt begrenzt wird, die insgesamt freibleibende Durchsichtsfläche noch ca. 10 % beträgt.

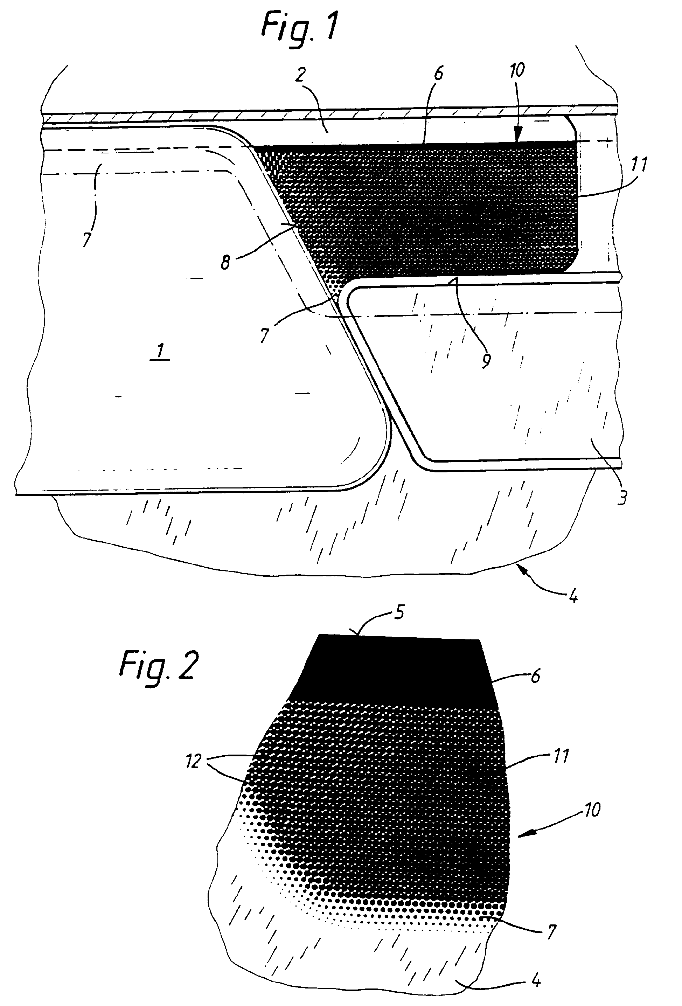

In der Praxis hat sich gezeigt, daß dieser Wert einerseits einen ausreichenden Schutz vor blendenden Sonnenstrahlen erbringt, er andererseits aber eine Beobachtung des oberen Verkehrsraumes gestattet, so daß z. B. der Farbwechsel hoch angebrachter Verkehrsampeln klar erkannt wird. Das Punktmuster 11 wird - wie dies Figur 2 zeigt - außer durch den Streifen 6 noch durch das herumgeführte Punktmuster 7 mit zur Mitte der Frontscheibe 4 hin abnehmendem Punktdurchmesser begrenzt, so daß sich in Anlehnung an den angrenzenden Scheibenbereich ein harmonisches Aussehen ergibt. Der Aufwand für die Realisierung der Blende 10 läßt sich gering halten, wenn diese zusammen mit dem Streifen 6 und dem Punktmuster 7 in einem Arbeitsgang durch einen Siebdruckvorgang auf die Frontscheibe 4 aufgebracht wird.

## Patentansprüche

1. Frontscheibe (4) eines Kraftwagens, deren oberer Rand mit einem undurchsichtigen Streifen (6) versehen ist, an den sich ein aus undurchsichtigen Punkten bestehendes streifenförmiges Punktmuster (7) mit zur Scheibenmitte hin zunehmend vermindertem Punktdurchmesser anschließt, wobei innenseitig der Frontscheibe (4) voneinander beabstandet angeordnete, abklappbare Sonnenblenden (1) vorgesehen sind und im Abschnitt zwischen den abgeklappten Sonnenblenden (1), der unterseitig von der Projektion der Oberkante (9) des Innenspiegels (3) begrenzt wird, eine weitere Blende (10) vorgesehen ist,
**dadurch gekennzeichnet,**
daß die weitere Blende (10) als sich an den undurchsichtigen Streifen (6) zur Scheibenmitte hin anschließendes, gleichmäßig verteiltes Punktmuster (11) ausgebildet ist, und daß der Durchmesser der Punkte (12) des Punktmusters (11) und deren Abstand untereinander so bemessen ist, daß bezogen auf den durch das gleichmäßig verteilte Punktmuster (11) erfaßten Bereich die insgesamt freibleibende Durchsichtsfläche noch ca. 10 % beträgt.

2. Frontscheibe nach Anspruch 1,
**dadurch gekennzeichnet,**
daß der von dem gleichmäßig verteilten Punktmuster (11) eingenommene Bereich größer ist als der zwischen den abgeklappten Sonnenblenden (1) einerseits und dem randseitigen Streifen (6) und der Projektion der Oberkante (9) des Innenspiegels (3) andererseits gebildeten Abschnitt, so daß zu den abgeklappten Sonnenblenden (1) und dem Innenspiegel (3) hin eine Überlappung gegeben ist.

3. Frontscheibe nach den Ansprüchen 1 oder 2,
**dadurch gekennzeichnet,**
daß das gleichmäßig verteilte Punktmuster (11) außer durch den oberseitigen Streifen (6) noch durch das herumgeführte streifenförmige und zur Scheibenmitte hin einen abnehmenden Punktdurchmesser aufweisende Punktmuster (7) begrenzt wird.

## Claims

1. Windscreen (4) of a motor vehicle, the upper edge of which windscreen is provided with an opaque strip (6) which is adjoined by a strip-shaped dot pattern (7), consisting of opaque dots, having a dot diameter which is reduced increasingly towards the centre of the wind-screen, hinged sun visors (1) being provided, arranged spaced apart, on the inside of the windscreen (4), and a further shade (10) being provided in the portion between the folded-down sun visors (1), which portion is bounded at the bottom by the projection of the top edge (9) of the rear-view mirror (3), characterized in that the further shade (10) is constructed as an evenly distributed dot pattern (11) which adjoins the opaque strip (6) towards the centre of the windscreen, and in that the diameter of the dots (12) of the dot pattern (11) and their mutual spacing are dimensioned in such a way that, relative to the region covered by the evenly distributed dot pattern (11), the total viewing area remaining free is still about 10%.

2. Windscreen according to Claim 1, characterized in that the region taken up by the evenly distributed dot pattern (11) is larger than the portion formed between the folded-down sun visors (1) on the one hand and the edge-side strip (6) and the projection of the top edge (9) of the rear-view mirror (3) on the other hand, with the result that there is overlapping towards the folded-down sun visors (1) and the rear-view mirror (3).

3. Windscreen according to Claim 1 or 2, characterized in that the evenly distributed dot pattern (11) is bounded by the peripheral strip-shaped dot pattern (7), having a dot diameter decreasing towards the centre of the windscreen, as well as by the strip at the top (6).

## Revendications

1. Pare-brise (4) d'un véhicule, dont le bord supérieur est pourvu d'une bande opaque (6), suivie par un motif de points (7) en forme de bande constitué de points opaques dont les diamètres diminuent progressivement vers le milieu du pare-brise (4), sur le côté intérieur duquel il est prévu des écrans pare-soleil (1), espacés l'un de l'autre et rabattables et en outre il est prévu, dans une zone située entre les pare-soleil rabattus (1), qui est délimitée en bas par la projection du bord supérieur (9) du miroir intérieur (3), un autre écran (10), caractérisé en ce que l'autre écran(10) est agencé comme un motif de points (11) réparti uniformément et situé à la suite de la bande opaque (6) vers le milieu du pare-brise, et en ce que le diamètre des points (12) du motif de points (11) et leur espacement mutuel sont dimensionnés de telle sorte que, par rapport à la zone occupée par le motif de points (11) réparti uniformément, la surface totale de vision restant dégagée s'élève encore à environ à 10%.

2. Pare-brise selon la revendication 1, caractérisé en ce que la zone occupée par le motif de points (11) réparti uniformément est plus grande que la zone formée entre d'une part le pare-soleil (1) rabattu et d'autre part la bande de bordure (6) et la projection du bord supérieur (9) du miroir intérieur (3), de sorte qu'un recouvrement est crée par rapport au pare-soleil (1) rabattu et au miroir intérieur (3).

3. Pare-brise selon les revendications 1 et 2, caractérisé en ce que le motif de points (11) réparti uniformément est délimité non seulement par la bande (6) située du côté supérieur mais encore par le motif de points (7) agencé en forme de bande/périphérique et ayant des diamètres de points qui diminuent vers le milieu du pare-brise.
